# EUROPEAN PATENT APPLICATION

(11) **EP 1 365 533 A1**
(43) Date of publication of application: **26.11.2003**
(21) Application number: 02291241.4
(22) Date of filing: 21.05.2002
(51) Int. Cl.: H04L 1/00, H04B 10/207

(54) **Telecommunication system with configurable error correction**

(71) Applicant: ALCATEL, 75008 Paris (FR)
(72) Inventor: Gyselings, Tim, 2100 Deurne, (Antwerp) (BE); Ringoot, Edwin Augustus Philimena, 4564 CW St. Jansteen (NL); Six, Erwin Alfons Constant, 9270 Laarne (BE)
(74) Representative: Narmon, Gisèle

(57) **Abstract**

In telecommunication systems comprising upstream units (1) and downstream units (2,3), upstrcam units (1) are provided with first adders (15) for adding first additional information like extra cells or extra bytes to a downstream and first detectors (13) for detecting second additional information like extra bytes for error correction purposes, and downstream units (2,3) are provided with second adders (22,32) for adding said second additional information for error correction purposes to said upstream and second detectors (25,35) for detecting said first additional information for in response to said detecting of said first additional information configuring said second additional information. Said configurable error correction for the upstream possibly together with an additional error correction for the downstream allows low cost lasers having a low output power to be used, with said error correction taking care of errors resulting from the lower output power, and with the configurability of said error correction allowing the amount of error correction to be dependent upon for example the size of the network.

## Description

The invention relates to a telecommunication system comprising at least one upstream unit and at least two downstream units for sending downstreams comprising downstream frames from at least one upstream unit to at least two downstream units and for sending upstreams comprising upstream frames from at least one downstream unit to at least one upstream unit, with an upstream frame length being equal to or being a multiple of a downstream frame length.

Such an optical telecommunication system is for example based upon a standardised frame structure like for example G.983.1, in which a downstream comprises 2x28 cells each comprising 53 bytes and in which an upstream comprises 53 time slots each comprising 56 bytes.

A prior art optical telecommunication system is known from US 5,978,374, which is hereby incorporated by reference and which discloses in its abstract a headend facility (upstream unit) and downstream network units (downstream units).

The known telecommunication system is disadvantageous, inter alia, due to requiring different lasers for different networks comprising different numbers of units. For example in case of one upstream unit coupled to 32 downstream units, low cost lasers can be used having a low output power. For example in case of one upstream unit coupled to 64 downstream units, expensive lasers must be used having a higher output power.

It is an object of the invention, inter alia, of providing a telecommunication system as defined in the preamble which can be based upon low cost lasers.

The telecommunication system according to the invention is characterised in that said upstream unit comprises a first adder for adding first additional information to a downstream and comprises a first detector for detecting second additional information for error correction purposes added to an upstream by a second adder, with said downstream unit comprising the second adder for adding said second additional information for error correction purposes to said upstream and comprising a second detector for detecting said first additional information for in response to said detecting of said first additional information configuring said second additional information.

Said first adder adds said first additional information to the downstream. The second detector detects this first additional information, in response to which said second additional information (error correction information) is configured and added to the upstream. The first detector detects this second additional information for error correction purposes (for correcting errors in the upstream). Possibly, in addition, in case of said first additional information also being error correction information, the second detector further detects this first additional information for error correction purposes (for correcting errors in the downstream). Said configurable error correction for the upstream possibly together with an additional error correction for the downstream allows low cost lasers having a low output power to be used, with said error correction taking care of errors resulting from the lower output power, and with the configurability of said error correction allowing the amount of error correction to be dependent upon for example the size of the network.

The invention is based upon an insight, inter alia, that the low cost lasers with a smaller output power will result in an increase of the number of errors made, and is based upon a basic idea, inter alia, that a new structure with configurable error correction will allow these errors to be corrected. This configurable error correction allowing the use of low cost lasers is more important than the small disadvantage of a slightly reduced stream capacity.

The invention solves the problem, inter alia, of providing a telecommunication system which can be based upon low cost lasers, and is advantageous, inter alia, in that the configurable error correction will create a more reliable system independently of the size of the system. The invention solves the further problem, inter alia, of providing a telecommunication system which can supply more downstream units per laser, and is advantageous, inter alia, in that the more downstream units can be supplied by the same number of lasers without decreasing the reliability.

It should be noted that US 5,978,374 discloses the possibility of error correction. However, this error correction is based upon one or more bytes already present in one or more cells. US 5,978,374 does not disclose to add additional configurable information in the form of additional bytes and/or one or more additional cells and/or one or more additional time slots per frame and/or per cell.

A first embodiment of the telecommunication system according to the invention as defined in claim 2 is advantageous in that in case of said downstream comprising n x (m + k) cells each of m bytes, then the upstream comprises n x m cells of (m+k) bytes, and in case of said downstream comprising n x m cells each of (m+k) bytes, then the upstream comprises n x m cells of (m+k) bytes, and for both cases, if an asymmetrical downstream/upstream is used, then the n x m structure is repeated w times in the downstream, with w refering to the ratio downstream/upstream, with k being defined as the number of Forward Error Correction bytes which are needed for the protection of one upstream block, and with k being configurable by the upstream unit and being unknown by the downstream unit.

A second embodiment of the telecommunication system according to the invention as defined in claim 3 is advantageous in that said first adder adds said first additional information in the form of extra cells to cells in the downstream, with said second detector detecting these extra cells.

Said extra cells added to the standard cells already present can be detected easily by for example counting the number of cells in for example a frame. The extra cells may themselves comprise data information like the standard data cells already present and may then just by their presence indicate that the upstream must be provided with additional information for (upstream) error correction purposes and/or may comprise error correction information for (downstream) error correction purposes. By counting the number of data cells between an overhead cell (PLOAM) and a next overhead cell (PLOAM) the downstream unit expects to find (count) n x m cells (in case of no Forward Error Correction) in a frame. In case said downstream unit finds (counts) n x (m+k) = n x m + n x k, then there are n x k too many, and the downstream unit, due to knowing n and m, can calculate k.

A third embodiment of the optical telecommunication system according to the invention as defined in claim 4 is advantageous in that said first adder adds said first additional information in the form of at least one extra byte to a cell in the downstream, with said second detector detecting this at least one extra byte.

Said at least one extra byte added to the standard bytes already present in a cell can be detected easily by for example counting the number of bytes in a cell. The at least one extra byte may itself comprise information like the standard byte information already present and may then just by its presence indicate that the upstream must be provided with additional information for (upstream) error correction purposes and/or may comprise error correction information for (downstream) error correction purposes. At least one cell in said downstream will comprise said at least one additional byte, generally more than one or even all cells will each comprise this extra at least one byte. By counting the number of bytes between for example two HECs of two subsequent data cells and/or overhead cells (PLOAMs), the additional bytes in the dowstream are known, and therewith the additional bytes for the upstream can be configured.

A fourth embodiment of the optical telecommunication system according to the invention as defined in claim 5 is advantageous in that said second adder adds said second additional information in the form of at least one extra byte to a cell in the upstream, with said first detector detecting this at least one extra byte.

Said at least one extra byte added to the standard bytes already present in a cell can be detected easily by for example counting the number of bytes in a cell. The at least one extra byte will itself comprise information for error correction purposes. At least one cell in said upstream will comprise said at least one additional byte, generally more than one or even all cells will each comprise this extra at least one byte.

Said optical telecommunication system for example comprises a passive optical network or PON and for example corresponds with a point-to-multipoint system. The upstream unit for example corresponds with a line terminator, and the downstream unit for example correspond with a network terminator. Said error correction for example corresponds with Forward Error Correction or FEC.

The invention further relates to an upstream unit for use in a telecommunication system comprising at least one upstream unit and at least two downstream units for sending downstreams comprising downstream frames from at least one upstream unit to at least two downstream units and for sending upstreams comprising upstream frames from at least one downstream unit to at least one upstream unit, with an upstream frame length being equal to or being a multiple of a downstream frame length.

The upstream unit according to the invention is characterised in that said upstream unit comprises a first adder for adding first additional information to a downstream and comprises a first detector for detecting second additional information for error correction purposes added to an upstream by a second adder, with said downstream unit comprising the second adder for adding said second additional information for error correction purposes to said upstream and comprising a second detector for detecting said first additional information for in response to said detecting of said first additional information configuring said second additional information.

Embodiments of the upstream unit according to the invention correspond with the embodiments of the telecommunication system according to the invention.

The invention yet further relates to a downstream unit for use in a telecommunication system comprising at least one upstream unit and at least two downstream units for sending downstreams comprising downstream frames from at least one upstream unit to at least two downstream units and for sending upstreams comprising upstream frames from at least one downstream unit to at least one upstream unit, with an upstream frame length being equal to or being a multiple of a downstream frame length.

The downstream unit according to the invention is characterised in that said upstream unit comprises a first adder for adding first additional information to a downstream and comprises a first detector for detecting second additional information for error correction purposes added to an upstream by a second adder, with said downstream unit comprising the second adder for adding said second additional information for error correction purposes to said upstream and comprising a second detector for detecting said first additional information for in response to said detecting of said first additional information configuring said second additional information.

Embodiments of the downstream unit according to the invention correspond with the embodiments of the telecommunication system according to the invention.

The invention also relates to a method for telecommunication and comprising the steps of sending downstreams comprising downstream frames from at least one upstream unit to at least two downstream units and of sending upstreams comprising upstream frames from at least one downstream unit to at least one upstream unit, with an upstream frame length being equal to or being a multiple of a downstream frame length.

The method according to the invention is characterised in that method comprises the steps of in said upstream unit adding first additional information to a downstream and detecting second additional information for error correction purposes added to an upstream, and of, in said downstream unit adding said second additional information for error correction purposes to said upstream and detecting said first additional information for in response to said detecting of said first additional information configuring said second additional information.

Embodiments of the method according to the invention correspond with the embodiments of the telecommunication system according to the invention.

The invention yet also relates to a downstream signal frame structure for telecommunication for use in a telecommunication system comprising at least one upstream unit and at least two downstream units for sending downstreams comprising downstream frames from at least one upstream unit to at least two downstream units and for sending upstreams comprising upstream frames from at least one downstream unit to at least one upstream unit, with an upstream frame length being equal to or being a multiple of a downstream frame length.

The downstream signal frame structure according to the invention is characterised in that said downstream signal frame structure comprises first additional information added by at least one upstream unit and to be detected by at least one downstream unit for in response to said detecting of said first additional information configuring second additional information to be added to an upstream by at least one downstream unit.

Embodiments of the downstream signal frame structure according to the invention correspond with the embodiments of the telecommunication system according to the invention.

The invention further yet also relates to an upstream signal frame structure for telecommunication for use in a telecommunication system comprising at least one upstream unit and at least two downstream units for sending downstreams comprising downstream frames from at least one upstream unit to at least two downstream units and for sending upstreams comprising upstream frames from at least one downstream unit to at least one upstream unit, with an upstream frame length being equal to or being a multiple of a downstream frame length.

The upstream signal frame structure according to the invention is characterised in that said upstream signal frame structure comprises second additional information added and configured by at least one downstream unit and to be detected by at least one upstream unit for error correction purposes.

Embodiments of the upstream signal frame structure according to the invention correspond with the embodiments of the telecommunication system according to the invention.

These and other aspects of the invention will be apparent from and elucidated with reference to the embodiments(s) described hereinafter.

Figure 1 illustrates in block diagram form a prior art signal frame structure (1a) and three signal frame structures according to the invention (1b,1c,1d), and

figure 2 illustrates in block diagram form an optical telecommunication system according to the invention.

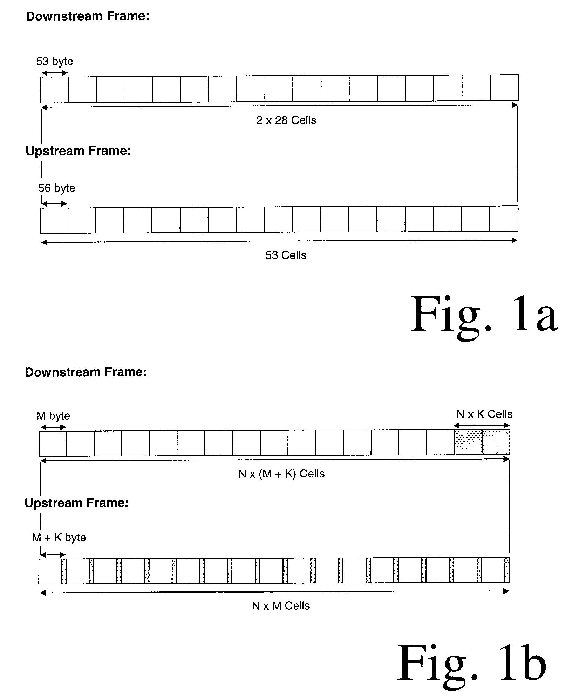

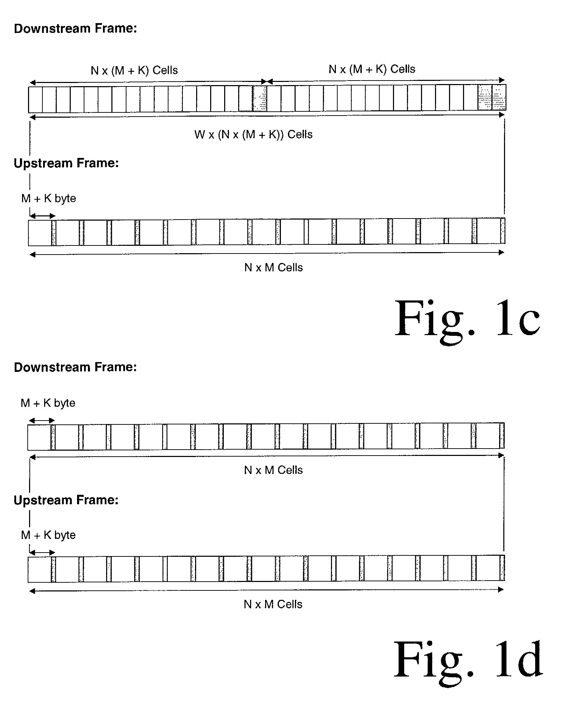

The four signal frame structures shown in figure 1 disclose in figure 1a) a prior art signal frame structure in accordance with G.983.1 comprising in the downstream 2x28 cells each comprising 53 bytes and comprising in the upstream 53 time slots each comprising 56 bytes. The downstream capacity and the upstream capacity are each for example 155 Mbps. In figure 1b), a signal frame structure in accordance with the invention is shown comprising in the downstream N x (M+K) cells of which N x M cells are original and of which N x K cells have been added and comprising in the upstream N x M cells each comprising M + K bytes with said M bytes being original bytes and with said K bytes being added bytes. These extra cells usually may themselves comprise data information like the standard data cells already present and may then just by their presence indicate that the upstream must be provided with additional information for (upstream) error correction purposes and/or alternatively may comprise error correction information for (downstream) error correction purposes. In figure 1c), a signal frame structure in accordance with the invention is shown comprising in the downstream W x (N x (M+K)) cells of which W x N x M cells are original and of which W x N x K cells have been added as described above with said W being the asymmetrical factor defining the ratio downstream/upstream and comprising in the upstream N x M cells each comprising M + K bytes with said M bytes being original bytes and with said K bytes being added bytes. In case of a downstream capacity of for example 622 Mbps and an upstream capacity of for example 155 Mbps, W is equal to four. In figure 1d), a signal frame structure in accordance with the invention is shown comprising in the downstream N x M cells each comprising M + K bytes of which said M bytes are original and of which said K bytes have been added and comprising in the upstream N x M cells each comprising M + K bytes with said M bytes being original bytes and with said K bytes being added bytes. Said extra bytes in the downstream usually may comprise error correction information for (downstream) error correction purposes and/or alternatively may themselves comprise information like the standard byte information already present and may then just by their presence indicate that the upstream must be provided with additional information for (upstream) error correction purposes.

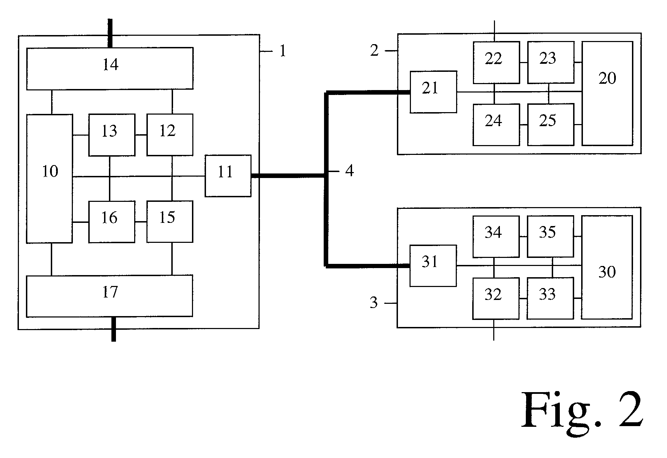

The (optical) telecommunication system according to the invention shown in figure 2 in block diagram form comprises an upstream unit or line terminator 1 coupled via an optical fiber 4 to two downstream units or network terminators 2 and 3.

Line terminator 1 comprises a processor 10 coupled via an internal bus to a convertor 11, which is further coupled to said optical fiber 4. Said internal bus is further coupled to an extractor 12 and to a detector 13 and to an adder 15 and a generator 16. Extractor 12 is further coupled to detector 13 and to an output switch 14, with detector 13 further being coupled to processor 10. Adder 15 is further coupled to generator 16 and to an input switch 17, with generator 16 further being coupled to processor 10.

Network terminator 2 (3) comprises a processor 20 (30) coupled via an internal bus to a convertor 21 (31), which is further coupled to said optical fiber 4. Said internal bus is further coupled to an extractor 24 (34) and to a detector 25 (35) and to an adder 22 (32) and a generator 23 (33). Extractor 24 (34) is further coupled to detector 25 (35), with detector 25 (35) further being coupled to processor 20 (30). Adder 22 (32) is further coupled to generator 23 (33), with generator 23 (33) further being coupled to processor 20 (30).

In view of figure 1b) the (optical) telecommunication system functions as follows. Data cells arriving at line terminator 1 via input switch 17 and destined for example for one out of sixteen or thirty-two network terminators, with just network terminators 2,3 being shown, are converted from optical format into electrical format in input switch 17 (or not if already arriving in electrical format) and supplied to adder 15. At the same time, processor 10 is informed of the arrival, which instructs generator 16 to generate additional cells, as shown in figure 1b)downstream, which additional cells are data cells comprising data information or idle information and are supplied to adder 15. Adder 15 combines said additional cells and said data cells as shown in figure 1b)downstream and supplies the combination signal to converter 11, which converts said combination signal from electrical format into optical format and supplies the combination signal to optical fiber 4.

Network terminators 2 (3) coupled to bus 4 receive said combination signal via converter 21 (31) which converts said combination signal from optical format into electrical format and supplies said combination signal to the internal bus. Detector 25 (35) detects the additional cells and informs processor 20 (30), which instructs extractor 24 (34) to extract one or more data cells, which are supplied to a personal computer coupled to adder 22 (32). The additional cells this time just indicate (apart from any possible data content) that the upstream must be provided with additional information for error correction purposes.

Data for example arriving from said personal computer via adder 22 (32) is added by adder 22 (32) to one or more additional bytes generated by and originating from generator 23 (33) for error correction purposes. This generating is for example controlled by processor 20 (30) in response to the before-mentioned indicating. Adder 22 (32) supplies a burst signal to converter 21 (31), which converts this burst signal from an electrical format into an optical format and supplies said burst signal to optical fiber 4, as shown in figure lb)upstream.

Line terminator 1 receives said burst signal via converter 11 which converts the message signal from an optical format into an electrical format and supplies said burst signal to the internal bus. Detector 13 detects the burst signal and the added bytes and informs processor 10, which instructs extractor 12 to extract the added bytes for error correction purposes. The rest of the burst signal is, after possible errors have been corrected, with or without an error correction mechanism, supplied to output switch 14 for being converted from an electrical format into an optical format if necessary and for example for being forwarded to a further destination.

So, by adjusting the number of additional cells for the downstream, the number of additional bytes for the upstream is configured: in case of said downstream comprising n x (m + k) cells each of m bytes, then the upstream comprises n x m cells of (m+k) bytes, with k being defined as the number of Forward Error Correction bytes which are needed for the protection of one upstream block, and with k being configurable by the upstream unit and being unknown by the downstream unit. Said extra cells added to the standard cells already present can be detected easily by detector 25 (35) by for example counting the number of cells in for example a frame. By counting the number of data cells between an overhead cell (PLOAM) and a next overhead cell (PLOAM) the downstream unit expects to find (count) n x m cells (in case of no Forward Error Correction) in a frame. In case said downstream unit finds (counts) n x (m+k) = n x m + n x k, then there are n x k too many, and the downstream unit, due to knowing n and m, can calculate k.

In view of figure 1d), the optical telecommunication system functions as follows. Data cells arriving at line terminator 1 via input switch 17 and destined for example for one out of sixteen or thirty-two network terminators, with just network terminators 2,3 being shown, are converted from optical format into electrical format in input switch 17 (or not if already arriving in electrical format) and supplied to adder 15. At the same time, processor 10 is informed of the arrival, which instructs generator 16 to generate additional bytes, as shown in figure ld)downstream, which additional bytes comprise error correction information and are supplied to adder 15. Adder 15 combines said additional bytes and said data cells as shown in figure 1d)downstream and supplies the combination signal to converter 11, which converts said combination signal from electrical format into optical format and supplies the combination signal to optical fiber 4.

Network terminators 2 (3) coupled to bus 4 receive said combination signal via converter 21 (31) which converts said combination signal from optical format into electrical format and supplies said combination signal to the internal bus. Detector 25 (35) detects the additional bytes and informs processor 20 (30), which instructs extractor 24 (34) to extract the additional bytes, which are supplied to processor 20 (30) for being processed for error correction purposes, and errors in said data cells are corrected, after which one or more data cells are supplied to a personal computer coupled to adder 22 (32). These additional bytes this time themselves comprise information for error correction purposes.

Data for example arriving from said personal computer via adder 22 (32) is added by adder 22 (32) to one or more additional bytes generated by and originating from generator 23 (33) for error correction purposes. This generating is for example controlled by processor 20 (30) in response to the before-mentioned receival of error correction information. Adder 22 (32) supplies a burst signal to converter 21 (31), which converts this burst signal from an electrical format into an optical format and supplies said burst signal to optical fiber 4, as shown in figure 1d)upstream.

Line terminator 1 receives said burst signal via converter 11 which converts the burst signal from an optical format into an electrical format and supplies said burst signal to the internal bus. Detector 13 detects the burst signal and the added bytes and informs processor 10, which instructs extractor 12 to extract the added bytes for error correction purposes. The rest of the burst signal is, after errors have been corrected, with or without an error correction mechanism, supplied to output switch 14 for being converted from an electrical format into an optical format if necessary and for example for being forwarded to a further destination.

So, by adjusting the number of additional bytes for the downstream, the number of additional bytes for the upstream is configured: in case of said downstream comprising n x m cells each of (m+k) bytes, then the upstream comprises n x m cells of (m+k) bytes, with k being defined as the number of Forward Error Correction bytes which are needed for the protection of one upstream block, and with k being configurable by the upstream unit and being unknown by the downstream unit. Said at least one extra byte added to the standard bytes already present in a cell can be detected easily by detector 25 (35) by for example counting the number of bytes in a cell. By counting the number of bytes between for example two HECs of two subsequent data cells and/or overhead cells (PLOAMs), the additional bytes in the dowstream are known, and therewith the additional bytes for the upstream can be configured.

Convertors 11,21,31 are of common general knowledge to a person skilled in the art. Extractors 12,24,34 and adders 15,22,32 for example comprise shift registers coupled to buffers or memories. Detectors 13,25,35 for example comprise comparators receiving comparison values from processors 10,20,30 and/or comprise counters for counting bytes and/or cells and/or frames. Generators 16,23,33 for example comprise buffers or memories to be controlled by said processors. Input switch 17 and output switch 14 are switches comprising for example and if necessary said well known converters. Adders 22,32 may further comprise interfaces which are of common knowledge to a person skilled in the art for interfacing network terminators 2,3 with for example personal computers. Any block shown in line terminator 1 and network terminators 2,3 respectively can be integrated with processor 10 and processor 20,30 respectively. Usually said converters will however be separate units.
Further, adder 15 and generator 16 could be integrated into one block (a unit) for said adding and said generating. Extractor 12 and detector 13 could be integrated into one block (a unit) for said detecting and said extracting. The same holds for adders 22,32 and generators 23,33 respectively, and for extractors 24,34 and detectors 25,35 respectively.

## Claims

1. Telecommunication system comprising at least one upstream unit (1) and at least two downstream units (2,3) for sending downstreams comprising downstream frames from at least one upstream unit (1) to at least two downstream units (2,3) and for sending upstreams comprising upstream frames from at least one downstream unit (2,3) to at least one upstream unit (1), with an upstream frame length being equal to or being a multiple of a downstream frame length, **characterised in that** said upstream unit (1) comprises a first adder (15) for adding first additional information to a downstream and comprises a first detector (13) for detecting second additional information for error correction purposes added to an upstream by a second adder (22,32), with said downstream unit (2,3) comprising the second adder (22,32) for adding said second additional information for error correction purposes to said upstream and comprising a second detector (25,35) for detecting said first additional information for in response to said detecting of said first additional information configuring said second additional information.

2. Telecommunication system according to claim 1, **characterised in that** in case of said downstream comprising n x (m + k) cells each of m bytes, then the upstream comprises n x m cells of (m+k) bytes, and in case of said downstream comprising n x m cells each of (m+k) bytes, then the upstream comprises n x m cells of (m+k) bytes, and for both cases, if an asymmetrical downstream/upstream is used, then the n x m structure is repeated w times in the downstream, with w refering to the ratio downstream/upstream, with k being defined as the number of Forward Error Correction bytes which are needed for the protection of one upstream block, and with k being configurable by the upstream unit and being unknown by the downstream unit.

3. Telecommunication system according to claim 1 or 2, **characterised in that** said first adder adds said first additional information in the form of extra cells to cells in the downstream, with said second detector detecting these extra cells.

4. Telecommunication system according to claim 1 or 2, **characterised in that** said first adder adds said first additional information in the form of at least one extra byte to a cell in the downstream, with said second detector detecting this at least one extra byte.

5. Telecommunication system according to claim 1, 2, 3 or 4, **characterised in that** said second adder adds said second additional information in the form of at least one extra byte to a cell in the upstream, with said first detector detecting this at least one extra byte.

6. Upstream unit (1) for use in a telecommunication system comprising at least one upstream unit (1) and at least two downstream units (2,3) for sending downstreams comprising downstream frames from at least one upstream unit (1) to at least two downstream units (2,3) and for sending upstreams comprising upstream frames from at least one downstream unit (2,3) to at least one upstream unit (1), with an upstream frame length being equal to or being a multiple of a downstream frame length, **characterised in that** said upstream unit (1) comprises a first adder (15) for adding first additional information to a downstream and comprises a first detector (13) for detecting second additional information for error correction purposes added to an upstream by a second adder (22,32), with said downstream unit (2,3) comprising the second adder (22,32) for adding said second additional information for error correction purposes to said upstream and comprising a second detector (25,35) for detecting said first additional information for in response to said detecting of said first additional information configuring said second additional information.

7. Downstream unit (2,3) for use in a telecommunication system comprising at least one upstream unit (1) and at least two downstream units (2,3) for sending downstreams comprising downstream frames from at least one upstream unit (1) to at least two downstream units (2,3) and for sending upstreams comprising upstream frames from at least one downstream unit (2,3) to at least one upstream unit (1), with an upstream frame length being equal to or being a multiple of a downstream frame length, **characterised in that** said upstream unit (1) comprises a first adder (15) for adding first additional information to a downstream and comprises a first detector (13) for detecting second additional information for error correction purposes added to an upstream by a second adder (22,32), with said downstream unit (2,3) comprising the second adder (22,32) for adding said second additional information for error correction purposes to said upstream and comprising a second detector (25,35) for detecting said first additional information for in response to said detecting of said first additional information configuring said second additional information.

8. Method for telecommunication and comprising the steps of sending downstreams comprising downstream frames from at least one upstream unit (1) to at least two downstream units (2,3) and of sending upstreams comprising upstream frames from at least one downstream unit (2,3) to at least one upstream unit (1), with an upstream frame length being equal to or being a multiple of a downstream frame length, **characterised in that** method comprises the steps of in said upstream unit (1) adding first additional information to a downstream and detecting second additional information for error correction purposes added to an upstream, and of, in said downstream unit (2,3) adding said second additional information for error correction purposes to said upstream and detecting said first additional information for in response to said detecting of said first additional information configuring said second additional information.

9. Downstream signal frame structure for telecommunication for use in a telecommunication system comprising at least one upstream unit (1) and at least two downstream units (2,3) for sending downstreams comprising downstream frames from at least one upstream unit (1) to at least two downstream units (2,3) and for sending upstreams comprising upstream frames from at least one downstream unit (2,3) to at least one upstream unit (1), with an upstream frame length being equal to or being a multiple of a downstream frame length, **characterised in that** said downstream signal frame structure comprises first additional information added by at least one upstream unit (1) and to be detected by at least one downstream unit (2,3) for in response to said detecting of said first additional information configuring second additional information to be added to an upstream by at least one downstream unit (2,3).

10. Upstream signal frame structure for telecommunication for use in a telecommunication system comprising at least one upstream unit (1) and at least two downstream units (2,3) for sending downstreams comprising downstream frames from at least one upstream unit (1) to at least two downstream units (2,3) and for sending upstreams comprising upstream frames from at least one downstream unit (2,3) to at least one upstream unit (1), with an upstream frame length being equal to or being a multiple of a downstream frame length, **characterised in that** said upstream signal frame structure comprises second additional information added and configured by at least one downstream unit (2,3) and to be detected by at least one upstream unit (1) for error correction purposes.
